# EUROPEAN PATENT SPECIFICATION

(11) **EP 2 116 842 B1**
(45) Date of publication and mention of the grant of the patent: **19.10.2016**
(21) Application number: 08155628.4
(22) Date of filing: 05.05.2008
(51) Int. Cl.: G01N 23/223

(54) **An X-ray fluorescence analyzer with gas-filled chamber**
Röntgenfluoreszenzanalysator mit gasgefüllter Kammer
Analyseur de fluorescence par rayons X doté d'une chambre remplie de gaz

(43) Date of publication of application: 11.11.2009
(73) Proprietor: Oxford Instruments Analytical Oy, 02630 Espoo (FI)
(72) Inventor: Pelli, Antti, 02600 ESPOO (FI)
(74) Representative: Berggren Oy Ab

(56) References cited:
- US-A1- 2005 129 174
- US-B2- 7 233 643

## Description

### TECHNICAL FIELD

The invention concerns in general the technology of X-ray fluorescence analysis. Especially the invention concerns the problem of avoiding unwanted attenuation of X-rays in an analyzer device.

### BACKGROUND OF THE INVENTION

X-ray fluorescence (XRF) analysis is a known way of analysing the constituent materials contained in a sample. The measurement principle comprises subjecting a part of the sample to incident X-rays and observing the energy and intensity of fluorescent X-rays generated in the sample. A typical portable XRF analyzer device comprises a front end, inside of which the X-ray source and the detector are located. A window foil covers an opening in the front end, allowing incident X-rays to pass from the X-ray source to the sample and fluorescent X-rays to pass from the sample to the detector. Such a portable XRF analyzer device is known e.g. from US-A-2005/0129174.

Especially when light elements are analyzed, the fluorescent X-rays appear in the soft end of the X-ray energy range. Consequently the fluorescent radiation from light elements is relatively easily attenuated in most intermediate media through which it must pass. The geometry of the front end of an XRF analyzer must allow an essentially line-of-sight path from the X-ray source to the sample, and correspondingly a line-of-sight path from the sample to the detector, while simultaneously keeping incident X-rays produced by the X-ray source from directly reaching the detector. Geometrical considerations are especially important in portable devices, in which the overall appearance of the apparatus should most advantageously be kept sleek, and consequently space may be scarce inside the front end parts. The front end of the X-ray analyzer device typically defines an empty space, sometimes referred to as the radiation chamber, through which both the incident radiation and the fluorescent radiation must pass.

Making the radiation chamber truly empty, in the sense of forming a vacuum inside the radiation chamber, is possible but not always practical especially in portable XRF analyzer devices. A large pressure difference between the radiation chamber and its environment requires great structural strength of all parts, including the window foil; on the other hand making the window foil and/or its support structure thick enough to stand the pressure difference means increasing attenuation of radiation in the foil itself. It is also difficult to seal the radiation chamber so tightly that it would not gradually draw in gaseous substances from the environment, causing an unknown amount of attenuation to radiation passing through the unknown gaseous medium in the chamber. Making the device contain a vacuum pump or corresponding means for reinstating the vacuum when required is possible, but tends to increase energy consumption and overall clumsiness of the device.

A known solution to reduce the attenuation of radiation on its way through the radiation chamber is to flush the radiation chamber with a gaseous substance such as helium, the atoms of which have a small interaction cross section with X-rays and which consequently causes relatively little attenuation. The problem of such solutions is the unknown amount of contamination with other gases that will take place over time. Again, even if the radiation chamber is well sealed, little by little some of the initial helium filling will permeate out and some air or other gaseous substance from the environment will permeate in. Not knowing the mixing ratio and exact composition of the gaseous substance in the radiation chamber means that uncontrollable errors are introduced to the XRF measurement. Using a helium source to flush the radiation chamber anew before every measurement is possible but costly.

An objective of the present invention is to present an X-ray fluorescence analyzer device and an X-ray fluorescence analysing method that reduce errors and uncertainties caused by attenuation of radiation inside the radiation chamber. A further objective of the invention is to free the user of an X-ray fluorescence analyzer from the need of constant access to gas sources.

The objectives of the invention are achieved by providing a substantially gastight radiation chamber at the front end of an X-ray fluorescence analyzer device, filling said radiation chamber to an overpressure with a suitable gaseous medium, and performing X-ray fluorescence measurements while an indicator system shows at least some of the overpressure to remain.

An X-ray fluorescence analyzer device according to the invention is characterised by the features recited in the characterising part of the independent claim directed to an X-ray fluorescence analyzer device.

A method for performing X-ray fluorescence measurements according to the invention is characterized by the features recited in the characterising part of the independent claim directed to a method.

The X-ray interaction cross section of atoms of suitably chosen gaseous substances, such as helium, is so small that attenuation of soft X-rays in helium is almost independent of pressure. At least we may say that attenuation in slightly overpressurized helium (in relation to atmospheric pressure) differs very little from attenuation in helium in atmospheric pressure: as a rule, the transmittivity of soft X-rays in 1000 mbar helium is only 0.1 % higher than in 1200 mbar helium. On the other hand, the small size of helium atoms means that taken a chamber filled with overpressurized helium, permeation of helium out of the chamber will take place much faster than permeation of contaminating gaseous substances from the environment into the chamber.

If a radiation chamber of an X-ray fluorescence analyzer device is initially filled to overpressure with helium or other weakly attenuating gas, the pressure difference will even out over a certain time period. With suitably selected materials and structures of the radiation chamber said time period can be made relatively long, at least the order of days. During the whole time period the attenuation of X-rays inside the radiation chamber will remain essentially constant. Contamination with other gaseous substances will become meaningful only at a much slower pace than that at which the original helium leaks out. The X-ray fluorescence analyzer device can be made to comprise a pressure indicator system that it configured to indicate, whether the pressure inside the radiation chamber is higher than a surrounding pressure by a predetermined threshold. An indication of the pressure difference falling below said threshold serves to alert the user to fill up the radiation chamber to a suitable overpressure again.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF DRAWINGS

- Fig. 1: illustrates parts of an X-ray fluorescence analyzer device,
- fig. 2: illustrates alternative possibilities for flushing a radiation chamber with a gaseous substance,
- fig. 3: illustrates the front end of an X-ray fluorescence analyzer according to an embodiment of the invention,
- fig. 4: illustrates a block diagram of an X-ray fluorescence analyzer according to an embodiment of the invention, and
- fig. 5: illustrates steps of a method according to an embodiment of the invention.

### DETAILED DESCRIPTION OF THE INVENTION AND ITS EMBODIMENTS

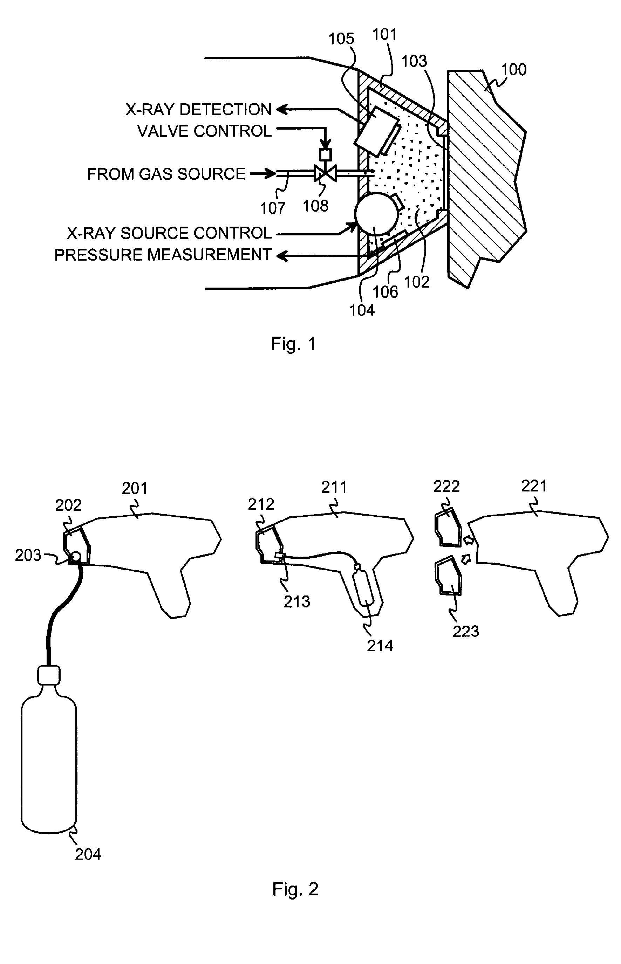

Fig. 1 illustrates schematically certain parts of an X-ray fluorescence analyzer device. The aim is to use X-ray fluorescence analysis to measure properties of a sample 100. Wall structures 101 located in the so-called front end or sample side of the X-ray fluorescence analyzer device define a closed radiation chamber 102.

On one side of the radiation chamber 102 a window foil 103 covers an opening that allows X-rays to pass to and from the sample 100. An X-ray source 104 is configured to emit incident X-rays that propagate from the X-ray source 104 through the radiation chamber 102 and window foil 103 towards the sample 100. An X-ray detector 105 is configured to receive fluorescent X-rays that originate in the sample 100 under irradiation by the incident X-rays and propagate through the window foil 103 and radiation chamber 102 to the detector 105.

The X-ray fluorescence analyzer device comprises a pressure indicator system that is configured to indicate, whether the pressure inside the radiation chamber 102 is higher than a surrounding pressure by a predetermined threshold. As a part of the pressure indicator system there is shown a pressure sensor 106 in fig. 7. Since the aim is to keep the radiation chamber 102 substantially filled with a selected gaseous substance, at a pressure that is higher than the surrounding pressure, there are provided a conduit 107 and a valve 108, through which said gaseous substance can be controllably conducted from a gas source (not shown) to the radiation chamber 102. As a significant difference to vacuum-based systems where measurement is only performed if the vacuum along the radiation path is deep enough, the X-ray fluorescence analyzer device is configured to allow performing an X-ray fluorescence measurement when said pressure indicator system indicates that the pressure inside the radiation chamber is higher than said surrounding pressure by a predetermined threshold.

Said difference to prior art vacuum-based systems is based on a significant difference in measurement strategy. Prior art systems measured directly the pressure of the attenuating medium, and took a high pressure reading as a sign of too much attenuation. According to the present invention, the pressure to be measured is not the pressure of the (most significantly) attenuating medium but the pressure of a kind of an indicator substance, a change in which is indicative of another, much slower occurring phenomenon that is not actually measured. In the present invention it is thus a low pressure reading that begins to signify too much attenuation.

Selecting said predetermined threshold deserves some consideration. The rate of permeation of gaseous substances between separate spaces is a function of permeability of the structure that separates said enclosures as well as of the difference in partial pressure of each substance. The atoms of helium, which is here considered as an example of a gaseous substance that has low absorption of soft X-rays, are small compared with the naturally occurring molecules of nitrogen and oxygen, which are the major constituents of air. Therefore any separating structure, most prominently the window foil, has typically a much higher permeability of helium than of air. Taken that the radiation chamber may be essentially completely filled with helium, while the surrounding environment contains normal atmospheric air (i.e. the difference in partial pressure is essentially 100% in both directions), the permeation of helium out of the radiation chamber takes place at a much higher rate than the permeation of air into the radiation chamber.

Some molecules of nitrogen, oxygen and other contaminating gases will inevitably leak into the opposite direction. At which point so much air has entered the radiation chamber that measurement errors due to attenuation become unacceptable, depends ultimately on the accuracy at which the measurement should be performed. We may assume that the X-ray fluorescence analyzer device is meant to be used in analyzing the concentrations of elements that indicate the presence of harmful substances, for which there exist standardized concentration limits. In such a case an unacceptable error is of the order that would cause an allowable sample to be erroneously designated as unallowable, or vice versa, with a certain probability.

The purity of the original gaseous substance filling of the radiation chamber has certain significance to the invention. Since the objective is to cause as little attenuation inside the radiation chamber as possible, the optimal case would be filling the radiation chamber with 100% pure gas of the selected kind, like helium. Such an absolute purity is difficult to obtain in practice. Typically the suppliers of gaseous substances guarantee the purity of the gas to a certain limit, like max. 50 ppm (parts per million) impurity content for industrial grade and less than 1 ppm for analytical grades. For the purposes of the present invention it is sufficient to know, what is the typical purity degree of helium or other selected gaseous substance that is assumed to be available to the users of the device. Calibration of the X-ray fluorescence analyzer device can be made with such a typical gas filling, after which the fluorescence measurement results will be reliable as long as the gaseous substance used later comes from the same source or has otherwise the same properties. Thus, when we say that a gaseous substance consists of some exemplary gas like helium, it suffices that helium is a major constituent of that gaseous substance and essentially determines its X-ray attenuation properties.

In principle it would be possible to measure the partial pressure of a number of gases inside the radiation chamber and use the result to detect the amount of contamination, but in practice that would easily lead to relatively complicated measurement solutions. When the structural parameters are known, experiments may be conducted that show how the degree of contamination with other gaseous substances will be linked to the declining pressure of the original helium filling. The predetermined threshold value of pressure difference between the radiation chamber and the environment can be then selected and programmed to a control program of the X-ray fluorescence analyzer.

In some cases said predetermined threshold could have even a negative value. In other words, the X-ray fluorescence analyzer device could allow the pressure of the radiation chamber to be even slightly lower than the surrounding pressure. Literally spoken, such a condition could be characterised so that the pressure inside the radiation chamber is higher than a surrounding pressure by a predetermined negative threshold (because "higher by negative value" is the same as lower by the absolute value of said negative value). This condition could occur not only as the result of helium permeating out faster than air permeating in, but also for example when atmospheric pressure fluctuates due to natural meteorological reasons. Depending on the desired operation of the X-ray fluorescence analyzer device it may be programmed to allow a negative pressure difference (radiation chamber at lower pressure than environment) for a certain period of time.

Filling the radiation chamber to an overpressure with helium has also another advantageous consequence. The pressure difference between the inside and outside of the window foil will cause the window foil bulge slightly outwards. This bulging acts to decrease any air gap that could otherwise be left between the window foil and the sample, which is advantageous because the air in such an air gap will definitely cause attenuation of soft X-rays. If a negative pressure difference is also allowed, the consequential inwards bulging of the window foil must be taken into account.

Fig. 2 illustrates three different principal solutions for ensuring that a closed radiation chamber at the front end of a portable X-ray fluorescence analyzer device can be held at a pressure that is higher than a surrounding pressure by a predetermined threshold. The leftmost portable X-ray fluorescence analyzer device 201 comprises a fixed radiation chamber 202 and an external filling valve 203, through which the radiation chamber 202 can be filled to overpressure in relation to the environment from an external gas source 204. The middle X-ray fluorescence analyzer device 211 comprises a fixed radiation chamber 212 and an internal filling valve 213, through which the radiation chamber 212 can be filled to overpressure in relation to the environment from an internal, integrated gas source 214. The internal gas source 214 may be e.g. a disposable high-pressure gas cartridge or a refillable internal high-pressure gas container.

The rightmost portable X-ray fluorescence analyzer device 221 can be equipped with disposable interface cartridges, of which an old cartridge 222 and a new cartridge 223 are schematically shown. The interface cartridges comprise the necessary interfaces to the X-ray source, the detector and the pressure indicator subsystem (which are not separately shown) in the device body, and a front face with a sample side window to be placed against the sample.

A desktop X-ray fluorescence analyzer device has basically the same alternatives, augmented with the possibility of having the device permanently connected to an external gas source.

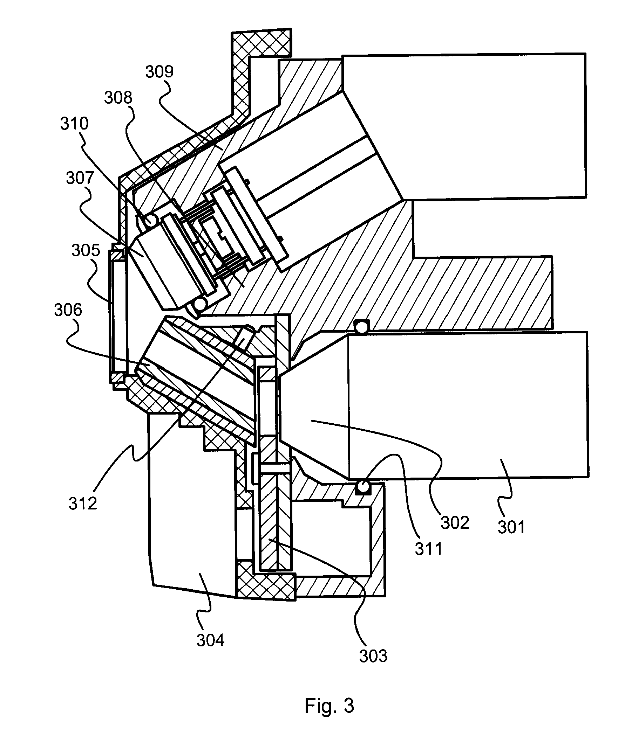

Fig. 3 illustrates in more detail the front end of an X-ray fluorescence analyzer according to an embodiment of the invention. A miniature X-ray tube 301 is used as the X-ray source. The anode (not separately shown) of the X-ray tube 301 is located at narrower end of the tapering portion 302. A filter and/or shutter mechanism is located near the anode end of the X-ray tube 301. In this embodiment the mechanism is meant for easily changing filters used on the initial radiation path, and it comprises a rotatable disc 303, the shape of which defines at least one hole that can be aligned with the anode end of the X-ray tube 301. A sensor mechanism is schematically illustrated as the block 304. The idea of the sensor mechanism 304 is to detect, whether the X-ray fluorescence analyzer is directed towards a target, and only allow switching on the X-ray tube 301 if this is the case. Thus the user is prevented from accidentally emitting X-rays when the analyzer is not directed towards a target.

A window 305 is provided at the front end of the X-ray fluorescence analyzer for incident radiation to pass towards a target and for fluorescent radiation to pass from the target towards the detector. Between the anode end of the X-ray tube 301 and the window 305 is a collimator tube 306, which directs X-rays generated in the X-ray tube 301 towards the window 305. In this embodiment of the invention the longitudinal axis of the collimator tube 306 is at an oblique angle of about 30 degrees in respect of the longitudinal axis of the X-ray tube 301. This helps in keeping the overall structure compact, because an X-ray tube of end window type (like the one used in the embodiment of fig. 3) has always a certain length in the direction of its longitudinal axis, and a certain diameter in the perpendicular direction. The obliquely directed collimator tube 306 brings the spot where the incident X-rays will hit the sample away from the extension of the longitudinal axis of the X-ray tube, so that placing a detector closer to said spot is easier.

A detector 307 is located as close to the window 305 as possible. The detector is preferably enclosed in a small, cylindrical casing, one flat end of which constitutes the receiving surface for receiving fluorescent radiation. Inside the cylindrical casing is the detector chip, which constitutes most advantageously a silicon drift detector or a silicon PIN diode detector. The detector is in a tilted position in the embodiment of fig. 3, which means that the normal direction of the receiving surface of the detector is at an oblique angle to the plane of the window 305. This again helps in keeping the distances as small as possible, because the output end of the collimator tube 306 and the receiving surface of the detector 307 can be placed very close to each other next to the window 305, yet so that both of them have an essentially unlimited view to the window 305. Small distances and compact structure help not only in keeping short the distances that the soft X-rays are required to propagate, but also in reducing the consumption of helium or other gaseous filling substance, because only a small amount is needed for filling the radiation chamber to the desired overpressure.

The empty space between the window 305, the output end of the collimator tube 306 and the receiving surface of the detector 307 constitutes the radiation chamber. In this embodiment of the invention the free volume of the radiation chamber is kept small by using solid structures like those illustrated as 308 and 309 to support the collimator tube and detector and to fill in space that would otherwise be left empty around them. Sealing structures like the O-ring 310 around the detector and the O-ring 311 around the X-ray tube may be used to limit the space in which gaseous substances can flow freely in the radiation chamber. The distance along the normal of the receiving surface of the detector 307 from the centre point of the receiving surface to the window foil is in the order of some millimetres, like 5.9 to 6.2 millimetres.

The pressure sensor 312 is located at one limiting surface of the radiation chamber, here between the collimator tube 306 and the detector 307. The pressure of an ordinary gaseous medium within a closed space is an isotropic quantity, so the location of the pressure sensor is not significant for purposes of the present invention.

Simulation calculations have been conducted to evaluate the transmission of soft X-rays from a calibration source to the detector 307 in an arrangement like that in fig. 3. The simulation assumed first filling the radiation chamber with 1100 mbar of helium, and then filling the radiation chamber with 60 mbar, 85 mbar and 1013 mbar of air instead. For each filling, transmission of soft X-rays was calculated as a percentage of the original radiation intensity first without an air gap and then with an air gap of 1 mm between the calibration source and the window 305. The following table shows the results:

| | He 1100 mbar | Air 60 mbar | Air 85 mbar | Air 1013 mbar |
|---|---|---|---|---|
| Air gap 0 mm | 57% | 50% | 47% | 7% |
| Air gap 1 mm | 44% | 39% | 37% | 7% |

The results show that for example the zero air gap, the transmittivity of overpressurized helium in the radiation chamber is approximately 114% of that of 60 mbar of air, 121% of that of 85 mbar of air, and an impressive 814% of that of air at normal pressure.

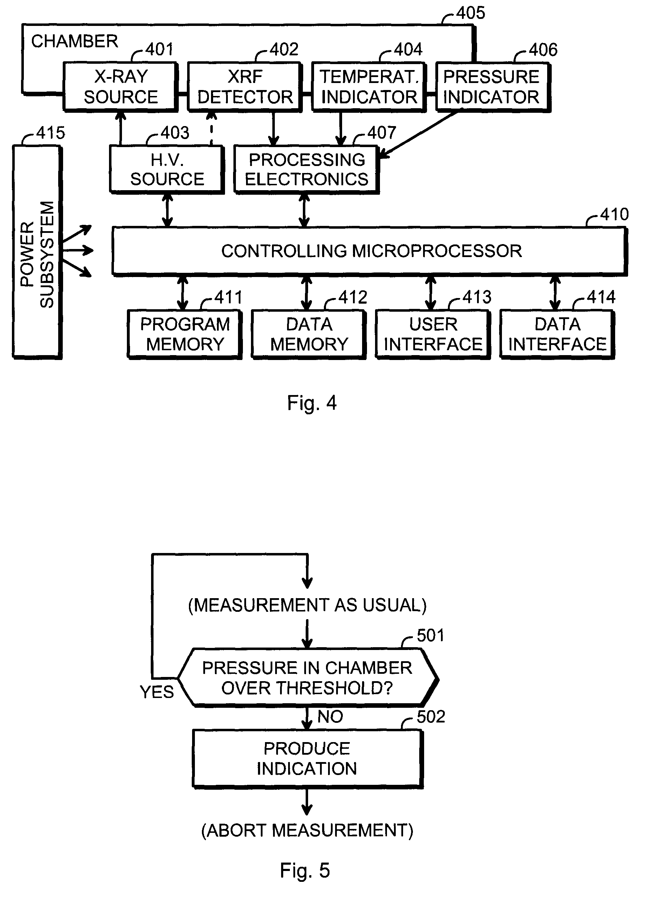

Fig. 4 illustrates a system level approach to an XRF analyzer according to an embodiment of the invention. The X-ray source 401 is selected so that the incident X-rays it produces will be useful in exciting the relatively low-energy states of light elements in a sample. The X-ray detector 402 is selected so that it can reliably detect also the relatively low-energy fluorescent radiation coming from such light elements. A high voltage source 403 is coupled to deliver the necessary high voltages at least to the X-ray source 401 and possibly also to the X-ray detector 402, if high voltages are needed there for biasing.

A temperature indicator subsystem 404 may be used to produce an indication of the temperature of the components of the analyzer, in case its effect should be taken into account in the processing of measurement results. Especially the temperature of the detector may have a significant effect on the results. Normal variations of operating temperature have such a small influence to the density of helium that the effect of temperature on the attenuation of soft X-rays in the radiation chamber is not very significant. More important to the aspects of the present invention is the pressure indicator subsystem 406, one sensor of which is inside the chamber 405 or otherwise so located that it can sense the pressure inside the chamber 405. If desired, the pressure indicator subsystem 406 may include also other sensors for measuring e.g. the pressure of the surrounding atmosphere. The output signals of the X-ray detector 402, the temperature indicator subsystem 404 and the pressure indicator subsystem 406 are coupled to a processing electronics block 407, which is configured to implement signal processing functions such as amplification, pulse shaping, filtering and A/D conversion.

A controlling microprocessor 410 is configured to act as the central controlling entity of the XRF analyzer. It controls the operation of the high voltage source 403 and possibly receives feedback therefrom, and it receives the measurement information from the processing electronics block 406 and tunes the signal processing operations if needed. The controlling microprocessor 410 operates by executing a program stored in a program memory 411 and uses a data memory 412 for storing and retrieving data. The controlling microprocessor 410 is also coupled to a user interface 413, which typically comprises keys and/or switches through which a user can give input commands, and a display and/or other sensory indicators, such as lights and buzzers, to give sensory feedback to the user. A data interface 414 is provided and coupled to the controlling microprocessor 410 so that the XRF analyzer may exchange data with other electronic devices. In some embodiments the analyzer comprises an interface for attaching a control unit to the apparatus, and connections from e.g. the pressure and temperature sensors to the interface so that all processing can be made in the control unit.

The functionalities that are described here as taking place in a single controlling microprocessor 410 may, in a way well known as such, be distributed among a number of different parts or circuits of the XRF analyzer. A conventional power subsystem 415 is configured to feed operating power to all electrically driven parts of the XRF analyzer.

Fig. 5 illustrates schematically steps of a measurement method according to an embodiment of the invention. Before beginning a measurement, and also during measurements, the pressure of the radiation chamber is monitored according to step 501. If the pressure is over the predetermined threshold, it is assumed that since not too much helium has leaked out, also not too much other gaseous substances have leaked in, and consequently attenuation inside the radiation chamber will not cause too much distortion in the fluorescence measurement. If monitoring the pressure at step 501 reveals that the internal pressure of the radiation chamber has reached the threshold, an indication is produced at step 502 and preferably further fluorescence measurements are prevented. Alternatively the further fluorescence measurements may be allowed, but the assumed gaseous contamination inside the radiation chamber is taken into account in some way. Possibilities include but are not limited to instructing the processing electronics and/or the controlling microprocessor to employ a calculational correction to the fluorescence measurement results, and tagging all further fluorescence measurement results with an indicator label, which shows that they were obtained under suboptimal attenuation conditions inside the radiation chamber.

## Claims

1. An X-ray fluorescence analyzer device, comprising:
- a closed radiation chamber (102) containing a gaseous substance,
- an X-ray source (104) configured to emit incident X-rays towards a sample through the radiation chamber, and
- an X-ray detector (105) configured to receive fluorescent X-rays from the sample through the radiation chamber,
**characterized in that**:
- the device comprises a pressure indicator system configured to indicate, whether the pressure inside the radiation chamber is higher than a surrounding pressure by a predetermined threshold, and
- the device is configured to allow performing an X-ray fluorescence measurement when said pressure indicator system indicates that the pressure inside the radiation chamber is higher than said surrounding pressure by said predetermined threshold.

2. An X-ray fluorescence analyzer device according to claim 1, wherein the gaseous substance filling the radiation chamber consists essentially of helium.

3. An X-ray fluorescence analyzer device according to any of claims 1 or 2, comprising an external filling valve for allowing the radiation chamber to be filled to overpressure in relation to the environment from an external gas source.

4. An X-ray fluorescence analyzer device according to any of claims 1 or 2, comprising an internal, integrated gas source and an internal filling valve for allowing the radiation chamber to be filled to overpressure in relation to the environment from the internal, integrated gas source.

5. An X-ray fluorescence analyzer device according to claim 4, wherein the internal, integrated gas source is a disposable gas cartridge.

6. An X-ray fluorescence analyzer device according to claim 4, wherein the internal, integrated gas source is a refillable internal gas container.

7. An X-ray fluorescence analyzer device according to any of claims 1 or 2, wherein the closed radiation chamber is a sealed disposable cartridge.

8. An X-ray fluorescence analyzer according to any preceding claim, wherein the X-ray fluorescence analyzer is handheld and portable.

9. A method for performing X-ray fluorescence analysis using an analyzer device according to any preceding claim, comprising:
- emitting incident X-rays towards a sample through a radiation chamber,
- receiving fluorescent X-rays from the sample through the radiation chamber,
- indicating, whether the pressure inside the radiation chamber is higher than a surrounding pressure by a predetermined threshold, and
- allowing the performing of an X-ray fluorescence measurement when said pressure indicator system indicates that the pressure inside the radiation chamber is higher than said surrounding pressure by said predetermined threshold.

10. A method according to claim 9, comprising filling the radiation chamber with helium to overpressure in relation to the environment prior to performing the other steps of the method.

11. A method according to any of claims 9 or 10, comprising preventing further X-ray fluorescence measurements when said pressure indicator system indicates that the pressure inside the radiation chamber is not higher than said surrounding pressure by said predetermined threshold.

12. A method according to any of claims 9 or 10, comprising tagging further fluorescence measurement results with an indicator label, which shows that said fluorescence measurement results were obtained under suboptimal attenuation conditions inside the radiation chamber, when said pressure indicator system indicates that the pressure inside the radiation chamber is not higher than said surrounding pressure by said predetermined threshold.

## Patentansprüche

1. Röntgenfluoreszenzanalysevorrichtung, umfassend:
- eine geschlossene Strahlungskammer (102), die eine gasförmige Substanz enthält,
- eine Röntgenquelle (104), die zum Emittieren von auf eine Probe einfallenden Röntgenstrahlen durch die Strahlungskammer hindurch konfiguriert ist, und
- einen Röntgendetektor (105), der zum Empfangen von fluoreszierenden Röntgenstrahlen aus der Probe durch die Strahlungskammer hindurch konfiguriert ist,
**dadurch gekennzeichnet, dass**
- die Vorrichtung ein Druckanzeigesystem umfasst, welches konfiguriert ist, um anzuzeigen, ob der Druck im Inneren der Strahlungskammer um einen festgelegten Schwellenwert höher als ein Umgebungsdruck ist, und
- die Vorrichtung konfiguriert ist, um das Durchführen einer Röntgenfluoreszenzmessung zuzulassen, wenn das Druckanzeigesystem anzeigt, dass der Druck im Inneren der Strahlungskammer um den festgelegten Schwellenwert höher als der Umgebungsdruck ist.

2. Röntgenfluoreszenzanalysevorrichtung nach Anspruch 1, wobei die gasförmige Substanz, welche die Strahlungskammer füllt, im Wesentlichen aus Helium besteht.

3. Röntgenfluoreszenzanalysevorrichtung nach einem der Ansprüche 1 oder 2, umfassend ein externes Füllventil, um die Strahlungskammer in Bezug auf die Umgebung aus einer externen Gasquelle auf Überdruck füllen zu können.

4. Röntgenfluoreszenzanalysevorrichtung nach einem der Ansprüche 1 oder 2, umfassend eine interne integrierte Gasquelle und ein internes Füllventil, um die Strahlungskammer in Bezug auf die Umgebung aus der internen integrierten Gasquelle auf Überdruck füllen zu können.

5. Röntgenfluoreszenzanalysevorrichtung nach Anspruch 4, wobei die interne integrierte Gasquelle eine Einweggaskartusche ist.

6. Röntgenfluoreszenzanalysevorrichtung nach Anspruch 4, wobei die interne integrierte Gasquelle ein wieder auffüllbarer interner Gasbehälter ist.

7. Röntgenfluoreszenzanalysevorrichtung nach einem der Ansprüche 1 oder 2, wobei die geschlossene Strahlungskammer eine versiegelte Einwegkartusche ist.

8. Röntgenfluoreszenzanalysator nach einem der vorhergehenden Ansprüche, wobei der Röntgenfluoreszenzanalysator handgeführt und tragbar ist.

9. Verfahren zur Durchführung von Röntgenfluoreszenzanalyse unter Verwendung einer Analysevorrichtung nach einem der vorhergehenden Ansprüche, umfassend:
- Emittieren von auf eine Probe einfallenden Röntgenstrahlen durch eine Strahlungskammer hindurch,
- Empfangen von fluoreszierenden Röntgenstrahlen aus der Probe durch die Strahlungskammer hindurch,
- Anzeigen, ob der Druck im Inneren der Strahlungskammer um einen festgelegten Schwellenwert höher als ein Umgebungsdruck ist, und
- Zulassen des Durchführens einer Röntgenfluoreszenzmessung, wenn das Druckanzeigesystem anzeigt, dass der Druck im Inneren der Strahlungskammer um den festgelegten Schwellenwert höher als der Umgebungsdruck ist.

10. Verfahren nach Anspruch 9, umfassend Füllen der Strahlungskammer mit Helium auf Überdruck in Bezug auf die Umgebung, bevor die anderen Schritte des Verfahrens durchgeführt werden.

11. Verfahren nach einem der Ansprüche 9 oder 10, umfassend Verhindern von weiteren Röntgenfluoreszenzmessungen, wenn das Druckanzeigesystem anzeigt, dass der Druck im Inneren der Strahlungskammer nicht um den festgelegten Schwellenwert höher als der Umgebungsdruck ist.

12. Verfahren nach einem der Ansprüche 9 oder 10, umfassend Tagging weiterer Fluoreszenzmessungsergebnisse mit einer Anzeigemarkierung, welche anzeigt, dass die Fluoreszenzmessungsergebnisse unter suboptimalen Abschwächungsbedingungen im Inneren der Strahlungskammer erhalten wurden, wenn das Druckanzeigesystem anzeigt, dass der Druck im Inneren der Strahlungskammer nicht um den festgelegten Schwellenwert höher als der Umgebungsdruck ist.

## Revendications

1. Dispositif analyseur de fluorescence de rayons X comprenant :
- une chambre d'irradiation fermée (102) contenant une substance gazeuse,
- une source de rayons X (104) configurée pour émettre des rayons X incidents vers un échantillon à travers la chambre d'irradiation, et
- un détecteur de rayons X (105) configuré pour recevoir des rayons X fluorescents depuis l'échantillon à travers la chambre d'irradiation,
**caractérisé en ce que** :
- le dispositif comprend un système indicateur de pression configuré pour indiquer si la pression à l'intérieur de la chambre d'irradiation est supérieure d'un seuil prédéterminé à une pression environnante, et
- le dispositif est configuré pour permettre la réalisation d'une mesure de fluorescence de rayons X quand ledit système indicateur de pression indique que la pression à l'intérieur de la chambre d'irradiation est supérieure dudit seuil prédéterminé à ladite pression environnante.

2. Dispositif analyseur de fluorescence de rayons X selon la revendication 1, dans lequel la substance gazeuse remplissant la chambre d'irradiation est constituée essentiellement d'hélium.

3. Dispositif analyseur de fluorescence de rayons X selon l'une quelconque des revendications 1 et 2, comprenant une vanne de remplissage externe pour permettre le remplissage, à partir d'une source de gaz externe, de la chambre d'irradiation en surpression par rapport à l'environnement.

4. Dispositif analyseur de fluorescence de rayons X selon l'une quelconque des revendications 1 et 2, comprenant une source de gaz intégrée interne et une vanne de remplissage interne pour permettre le remplissage, à partir de la source de gaz intégrée interne, de la chambre d'irradiation en surpression par rapport à l'environnement.

5. Dispositif analyseur de fluorescence de rayons X selon la revendication 4, dans lequel la source de gaz intégrée interne est une cartouche de gaz jetable.

6. Dispositif analyseur de fluorescence de rayons X selon la revendication 4, dans lequel la source de gaz intégrée interne est un récipient de gaz interne rechargeable.

7. Dispositif analyseur de fluorescence de rayons X selon la revendication 1 ou 2, dans lequel la chambre d'irradiation fermée est une cartouche jetable scellée.

8. Dispositif analyseur de fluorescence de rayons X selon l'une quelconque des revendications précédentes, dans lequel l'analyseur de fluorescence de rayons X est portatif et portable.

9. Procédé pour effectuer une analyse de fluorescence de rayons X utilisant un dispositif analyseur selon l'une quelconque des revendications précédentes, consistant à :
- émettre des rayons X incidents vers un échantillon à travers une chambre d'irradiation,
- recevoir des rayons X fluorescents depuis l'échantillon à travers la chambre d'irradiation,
- indiquer si la pression à l'intérieur de la chambre d'irradiation est supérieure d'un seuil prédéterminé à une pression environnante, et
- laisser se dérouler une mesure de fluorescence de rayons X quand ledit système indicateur de pression indique que la pression à l'intérieur de la chambre d'irradiation est supérieure dudit seuil prédéterminé à ladite pression environnante.

10. Procédé selon la revendication 9, comprenant le remplissage de la chambre d'irradiation avec de l'hélium jusqu'à surpression par rapport à l'environnement avant la réalisation des autres étapes du procédé.

11. Procédé selon l'une quelconque des revendications 9 ou 10, comprenant la prévention d'autres mesures de fluorescence de rayons X quand ledit système indicateur de pression indique que la pression à l'intérieur de la chambre d'irradiation n'est pas supérieure dudit seuil prédéterminé à ladite pression environnante.

12. Procédé selon l'une quelconque des revendications 9 ou 10, comprenant le marquage d'autres mesures de fluorescence de rayons X avec une étiquette d'indicateur, qui montre que lesdits résultats de mesure de fluorescence ont été obtenus dans des conditions d'atténuation sous-optimales à l'intérieur de la chambre d'irradiation, quand ledit système indicateur de pression indique que la pression à l'intérieur de la chambre d'irradiation n'est pas supérieure dudit seuil prédéterminé à ladite pression environnante.
